# EUROPÄISCHE PATENTANMELDUNG

(11) **EP 2 439 220 A1**
(43) Veröffentlichungstag der Anmeldung: **11.04.2012**
(21) Anmeldenummer: 10186741.4
(22) Anmeldetag: 06.10.2010
(51) Int. Cl.: C08G 18/12, C08G 18/48, C08G 18/76, C08G 18/28, C08K 9/04, C08K 9/06, C08G 18/38, C08L 25/04, C09J 175/04, C09J 175/08, C08L 75/08

(54) **Verringerung des Anteils an Isocyanatgruppen aufweisenden Monomeren in feuchtigkeitshärtenden Polyurethanzusammensetzungen**

(71) Anmelder: Sika Technology AG, 6340 Baar (CH)
(72) Erfinder: Mennecke, Klaas, 79807 Lottstetten (DE)
(74) Vertreter: Sika Patent Attorneys

(57) **Zusammenfassung**

Die vorliegenden Erfindung betrifft die Verwendung eines Trägermaterials, welches an seiner Oberfläche funktionelle Gruppen aufweist, die gegenüber Isocyanatgruppen reaktiv sind, zur Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer.

## Beschreibung

### Technisches Gebiet

Die Erfindung liegt auf dem Gebiet der feuchtigkeitshärtenden Polyurethanzusammensetzungen, welche insbesondere als elastische Klebstoffe, Dichtstoffe und Beschichtungen eingesetzt werden.

### Stand der Technik

Zusammensetzungen, welche auf Isocyanatgruppen aufweisenden Polyurethanpolymeren basieren, werden seit geraumer Zeit als elastische Klebstoffe, Dichtstoffe und Beschichtungen eingesetzt.

Die Herstellung der Isocyanatgruppen aufweisenden Polyurethanpolymere erfolgt dabei typischerweise durch Reaktion von Polyolen mit einem Überschuss an Polyisocyanaten. Durch die Herstellung bedingt, weist das Isocyanatgruppen aufweisende Polyurethanpolymer einen Restanteil an Polyisocyanaten, also an Isocyanatgruppen aufweisenden Monomeren, auf.

Die hergestellten Isocyanatgruppen aufweisenden Polyurethanpolymere werden üblicherweise ohne weitere Aufarbeitung in feuchtigkeitshärtende Polyurethanzusammensetzungen eingesetzt, wobei auch der Restanteil an Isocyanatgruppen aufweisenden Monomeren in der Zusammensetzung verbleibt.

Obwohl sich Isocyanatgruppen aufweisende Monomere bis zu einem gewissen Anteil vorteilhaft auf die Zusammensetzung auswirken können, ist es in zahlreichen Anwendungen erwünscht oder erforderlich, den Anteil an Isocyanatgruppen aufweisenden Monomeren in feuchtigkeitshärtenden Polyurethanzusammensetzungen zu verringern.

Zur Verringerung des Monomergehalts sind unterschiedliche Ansätze bekannt.

WO 03/046040 A1 beschreibt beispielsweise die Verringerung des Anteils an Isocyanatgruppen aufweisenden Monomeren durch Destillation des bei der Herstellung der Isocyanatgruppen aufweisenden Polyurethanpolymere erhaltenen Reaktionsprodukts, wobei die bei der Herstellung eingesetzten Ausgangsstoffe abdestilliert werden. Bekanntermassen ist die Destillation von Polymerzusammensetzungen aufwendig und teuer. Weiterhin ist die Einstellung eines gegebenenfalls gewünschten Monomergehalts bei dessen Verringerung schwierig.

Ein weitere Möglichkeit zur Verringerung des Monomergehalts ist beispielsweise beschreiben in EP 0 951 493 A1 und betrifft die Umsetzung eines Polyols mit mindestens zwei verschiedenen Diisocyanaten unterschiedlicher Reaktivität, wobei eines der Diisocyanate ein unsymmetrisches Diisocyanat ist. Dieser Ansatz ist in der Umsetzung sehr aufwendig und weist zudem den Nachteil auf, dass unsymmetrische Isocyanate häufig teuer sind. Weiterhin ist die Ausgestaltung des Isocyanatgruppen aufweisenden Polyurethans durch die limitierte Auswahl an unsymmetrischen Isocyanaten begrenzt.

### Darstellung der Erfindung

Aufgabe der vorliegenden Erfindung ist daher die Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer.

Erfindungsgemäss wird diese Aufgabe durch eine Verwendung gemäss Anspruch 1 gelöst.

Überraschenderweise wurde gefunden, dass die Verwendung eines Trägermaterials, welches an seiner Oberfläche funktionelle Gruppen aufweist, die gegenüber Isocyanatgruppen reaktiv sind, eine Verringerung des Anteils an Isocyanatgruppen aufweisenden Monomeren in Zusammensetzungen enthaltend mindestens ein Isocyanatgruppen aufweisendes Polyurethanpolymer herbeiführt, ohne die Zusammensetzung dabei zu beeinträchtigen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist die Verwendung eines Trägermaterials, welches an seiner Oberfläche funktionelle Gruppen aufweist, die gegenüber Isocyanatgruppen reaktiv sind, zur Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt. "Tetraalkoxysilane" stellen folglich gemäss dieser Definition keine Organosilane dar.

Als "Aminosilane" bzw. "Mercaptosilane" werden Organosilane bezeichnet, deren organischer Rest eine Aminogruppe bzw. eine Mercaptogruppe aufweist.

Unter "Molekulargewicht" versteht man im vorliegenden Dokument das Molekulargewichtsmittel Mₙ (Zahlenmittel).

Unter "Raumtemperatur" wird eine Temperatur von 23°C verstanden.

Das Trägermaterial, welches an seiner Oberfläche funktionelle Gruppen aufweist, die gegenüber Isocyanatgruppen reaktiv sind, kann ein organisches oder ein anorganisches Trägermaterial sein. Insbesondere ist das Trägermaterial an seiner Oberfläche mit funktionellen Gruppen, welche gegenüber Isocyanatgruppen reaktiv sind, funktionalisiert, d.h., dass die Oberfläche des Trägermaterials chemisch modifiziert ist.

Weiterhin handelt es sich beim Trägermaterial bevorzugt um ein poröses Trägermaterial, welches in Form von Partikeln vorliegt. Die Partikel können dabei eine beliebige Form, beispielsweise Kugeln, Späne, Blättchen und dergleichen, aufweisen. Bevorzugt liegt die Grösse der Partikel im Bereich von ≤ 1 mm.

Als organische Trägermaterialien eignen sich insbesondere makroporöse Partikel aus Polymeren wie beispielsweise einem Polyolefin, Polymethyl(meth)acrylat oder Polystyrol, deren Oberfläche mit funktionellen Gruppen, welche gegenüber Isocyanatgruppen reaktiv sind, funktionalisiert ist. Bevorzugt sind funktionalisierte, makroporöse Partikel aus Polystyrol.

Handelt es sich beim Trägermaterial um ein organisches Trägermaterial in Form von Partikeln, weisen diese insbesondere eine Grösse im Bereich von 0.1 bis 1 mm auf.

Geeignete organische Trägermaterialien sind beispielsweise unter dem Handelsnamen QuadraPure™ IDA, EDA oder DET kommerziell erhältlich von Johnson Matthey, plc, Grossbritannien.

Als anorganische Trägermaterialien eignet sich insbesondere Siliciumdioxid, dessen Oberfläche mit funktionellen Gruppen, welche gegenüber Isocyanatgruppen reaktiv sind, funktionalisiert ist. Besonders geeignet ist dabei amorphes Siliciumdioxid. Besonders geeignete Trägermaterialien sind pyrogene Kieselsäuren, wie sie beispielsweise in nicht funktionalisierter Form unter der Handelsbezeichnung Aerosil^{®} 200 von Evonik Degussa GmbH, Deutschland, kommerziell erhältlich sind.

Handelt es sich beim Trägermaterial um ein anorganisches Trägermaterial in Form von Partikeln, weisen diese insbesondere eine Grösse im Bereich von 0.001 bis 1 µm, insbesondere im Bereich von 1 bis 100 nm.

Die funktionellen Gruppen, welche gegenüber Isocyanatgruppen reaktiv sind, sind insbesondere Amino-, Mercapto-, Carboxyl-, oder Thioharnstoffgruppen, bevorzugt Aminogruppen.

Der Vorteil eines mit Aminogruppen funktionalisierten Trägermaterials ist, dass Aminogruppen eine besonders hohe Reaktivität gegenüber Isocyanatgruppen aufweisen.

Im Vergleich zu nicht funktionalisiertem Siliciumdioxid, welches an seiner Oberfläche häufig Hydroxylgruppen aufweist, die ebenfalls gegenüber Isocyanatgruppen reaktiv sind, führen funktionalisierte Siliciumdioxide, wie sie vorhergehend beschrieben worden sind, zu einer deutlich effizienteren Verringerung des Anteils an Isocyanatgruppen aufweisenden Monomeren, ohne dabei die Eigenschaften der Zusammensetzung als Kleb- oder Dichtstoff massgeblich zu beeinflussen.

Bevorzugt ist das Trägermaterial ein Siliciumdioxid, welches mit einem Organosilan funktionalisiert ist, dessen organischer Rest mindestens eine funktionelle Gruppe aufweist, welche gegenüber Isocyanatgruppen reaktiv ist. Die Funktionalisierung des Siliciumdioxids erfolgt dabei insbesondere durch Zusammenführen von Siliciumdioxid mit dem Organosilan.

Als Organosilane eignen sich insbesondere Aminosilane oder Mercaptosilane. Beispiele für geeignete Organosilane sind 3-Aminopropyltrimethoxysilan, N-Butyl-3-aminopropyltrimethoxysilan, N-Phenyl-3-amino-propyltrimethoxysilan, 3-Mercaptopropyltrimethoxysilan sowie Analoga der genannten Organosilane mit Ethoxy- oder Isopropoxygruppen anstelle der Methoxygruppen am Silicium.

Weiterhin eignen sich als Organosilane auch di- oder triaminofuntionelle Organosilane wie beispielsweise N-(2-Aminoethyl)-3-aminopropyltrimethoxysilan oder N-(2-Aminoethyl)-N'-[3-(trimethoxysilyl)propyl]ethylendiamin.

Meist bevorzugt ist das Trägermaterial ein amorphes Siliciumdioxid, welches mit einem Aminosilan funktionalisiert ist.

Durch die Verwendung eines Trägermaterials, wie es vorhergehend beschrieben worden ist, in Zusammensetzungen enthaltend mindestens ein Isocyanatgruppen aufweisendes Polyurethanpolymer, kann der Restanteil an Isocyanatgruppen aufweisenden Monomeren, welcher insbesondere aufgrund der Herstellung des Isocyanatgruppen aufweisenden Polyurethanpolymers in der Zusammensetzung verbleibt, entfernt oder verringert werden.

Weiterhin betrifft die vorliegende Erfindung eine Zusammensetzung umfassend
- mindestens ein Isocyanatgruppen aufweisendes Polyurethanpolymer;
- mindestens ein Isocyanatgruppen aufweisendes Monomer; sowie
- mindestens ein Trägermaterial, welches an seiner Oberfläche funktionelle Gruppen aufweist, die gegenüber Isocyanatgruppen reaktiv sind.

Die funktionellen Gruppen des Trägermaterials sind dabei zumindest teilweise mit Isocyanatgruppen des Isocyanatgruppen aufweisenden Monomers umgesetzt.

Das in der Zusammensetzung enthaltene, Isocyanatgruppen aufweisende Polyurethanpolymer ist typischerweise erhältlich aus der Umsetzung von mindestens einem Polyol mit mindestens einem Polyisocyanat, so wie sie dem Fachmann bestens bekannt ist.

Geeignete Polyole sind insbesondere Polyetherpolyole, Polyesterpolyole und Polycarbonatpolyole sowie Mischungen dieser Polyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Geeignete Polyole weisen bevorzugt ein mittleres Molekulargewicht von 250 bis 30'000 g/mol, insbesondere von 400 bis 8000 g/mol, und eine mittlere OH-Funktionalität im Bereich von 1.6 bis 3 auf.

Geeignete Polyole sind beispielsweise unter dem Handelsnamen Acclaim^{®} 4200 N kommerziell erhältlich von Bayer MaterialScience AG, Deutschland.

Geeignete Polyisocyanate sind handelsübliche aliphatische, cycloaliphatische oder aromatische Polyisocyanate. Besonders geeignet sind Diisocyanate wie 1,6-Hexamethylendiisocyanat (HDI), 2,2,4- und 2,4,4-Trimethyl-1,6-hexamethylendiisocyanat (TMDI), 1-Isocyanato-3,3,5-trimethyl-5-isocyanatomethyl-cyclohexan (= Isophorondiisocyanat oder IPDI), 2,4- und 2,6-Toluylendiisocyanat (TDI), 4,4'-, 2,4'- und 2,2'-Diphenylmethandiisocyanat (MDI). Besonders geeignet sind dabei technische Mischungen von MDI mit einem hohen Anteil an 4,4'-MDI.

Geeignete Polyole und Polyisocyanate sind beispielsweise solche, wie sie zur Herstellung des Polyurethanpolymers PUP beschrieben sind in der Patentanmeldung WO 2010/049516 A1, deren Offenbarung hiermit durch Bezugnahme eingeschlossen ist.

Bevorzugte Zusammensetzungen können auch mehrere unterschiedliche Isocyanatgruppen aufweisende Polyurethanpolymere umfassen, welche unter Verwendung unterschiedlicher Polyisocyanate hergestellt wurden, wodurch die Zusammensetzung auch unterschiedliche Isocyanatgruppen aufweisende Monomere umfasst. Beispielsweise umfasst die Zusammensetzung mindestens ein Isocyanatgruppen aufweisendes Polyurethanpolymer aus einem polymeren Diol und MDI als Diisocyanat und ein Isocyanatgruppen aufweisendes Polyurethanpolymer aus einem polymeren Diol und TDI als Diisocyanat. Eine entsprechende Zusammensetzung umfasst demnach als Isocyanatgruppen aufweisende Monomere MDI und TDI.

Vorzugsweise weisen die in der erfindungsgemässen Zusammensetzung enthaltenen Isocyanatgruppen aufweisenden Polyurethanpolymere ein mittleres Molekulargewicht von 1000 bis 50'000 g/mol, insbesondere von 2000 bis 30'000 g/mol, und eine mittlere NCO-Funktionalität im Bereich von 1.8 bis 3 auf.

Das in der Zusammensetzung enthaltene mindestens eine Isocyanatgruppen aufweisende Monomer, ist typischerweise ein Diisocyanat und stammt von der Herstellung des Isocyanatgruppen aufweisenden Polyurethanpolymers her. Demnach handelt es sich beim Isocyanatgruppen aufweisenden Monomer in der Regel um einen Ausgangsstoff der Herstellung des Polyurethanpolymers, der insbesondere anfällt, da zur Herstellung eines Isocyanatgruppen terminierten Polyurethanpolymers, das Diisocyanat gegenüber dem Polyol im stöchiometrischen Überschuss eingesetzt wird.

Das in der Zusammensetzung enthaltene Trägermaterial ist bereits vorhergehend beschrieben worden, wobei die funktionellen Gruppen des Trägermaterials in der beschriebenen Zusammensetzung zumindest teilweise mit Isocyanatgruppen des Isocyanatgruppen aufweisenden Monomers umgesetzt sind.

Die zumindest teilweise Umsetzung des Isocyanatgruppen aufweisenden Monomers mit den funktionellen Gruppen des Trägermaterials erfolgt beim Zusammenführen der Zusammensetzung mit dem Trägermaterial und führt zu einer Verringerung des Anteils des Isocyanatgruppen aufweisenden Monomers in der Zusammensetzung.

Der Anteil an funktionalisiertem Trägermaterial beträgt insbesondere 0.1 bis 10 Gew.-%, insbesondere 0.5 bis 5 Gew.-%, bezogen auf das Gesamtgewicht der Zusammensetzung.

Der Anteil an Isocyanatgruppen aufweisendem Monomer, welches in der Zusammensetzung verbleibt, beträgt insbesondere ≤ 1.5 Gew.-%, bevorzugt ≤ 1 Gew.-%, bezogen auf das Gewicht der gesamten Zusammensetzung.

In einer bevorzugten Zusammensetzungen enthaltend mindestens ein Isocyanatgruppen aufweisendes Polyurethanpolymer aus einem polymeren Diol und MDI als Diisocyanat und somit auch einen Restanteil an monomerem MDI, liegt der Anteil an MDI insbesondere bei ≤ 0.1 Gew.-%, bezogen auf das Gewicht der gesamten Zusammensetzung.

Weiterhin kann die erfindungsgemässe Zusammensetzung weitere Bestandteile enthalten, welche in der Polyurethanchemie und insbesondere im Bereich der feuchtigkeitshärtenden Kleb- und Dichtstoffe auf Basis von Polyurethanpolymeren üblich und dem Fachmann bestens bekannt sind.

Typischerweise umfassen solche weiteren Bestandteile Füllstoffe, Katalysatoren, Haftvermittler, Rheologie-Modifizierer, Weichmacher, Reaktivverdünner, Trocknungsmittel und dergleichen.

Insbesondere enthält die erfindungsgemässe Zusammensetzung zusätzlich mindestens einen Füllstoff.

Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte Zusammensetzung.

Weiterhin betrifft die vorliegende Erfindung ein Verfahren zur Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer umfassend die Schritte
- Bereitstellen einer Zusammensetzung enthaltend mindestens ein Isocyanatgruppen aufweisendes Polyurethanpolymer sowie mindestens ein Isocyanatgruppen aufweisendes Monomer;
- Zusammenführen der Zusammensetzung enthaltend mindestens ein Isocyanatgruppen aufweisendes Polyurethanpolymer sowie mindestens ein Isocyanatgruppen aufweisendes Monomer mit einem Trägermaterial, welches an seiner Oberfläche funktionelle Gruppen aufweist, die gegenüber Isocyanatgruppen reaktiv sind, so wie es vorhergehend beschrieben worden ist.

Dieses erfindungsgemässe Verfahren führt zu einer Verringerung des Anteils an Isocyanatgruppen aufweisenden Monomeren in der Zusammensetzung.

In einer ersten Ausführungsform des erfindungsgemässen Verfahrens handelt es sich bei der Zusammensetzung enthaltend mindestens ein Isocyanatgruppen aufweisendes Polyurethanpolymer sowie mindestens ein Isocyanatgruppen aufweisendes Monomer um eine Zusammensetzung, welche direkt und ohne weitere Aufarbeitung aus der Herstellung des Isocyanatgruppen aufweisenden Polyurethanpolymers hervorgeht. Eine derartige Zusammensetzung umfasst typischerweise das Isocyanatgruppen aufweisende Polyurethanpolymer als Reaktionsprodukt, Restanteile der eingesetzten Ausgangsstoffe sowie allfällige weitere, dem Fachmann bekannte Bestandteile, welche für die Herstellung des Polyurethanpolymers benötigt werden.

Das Zusammenführen einer derartigen Zusammensetzung mit dem funktionalisierten Trägermaterial erfolgt üblicherweise unter ständigem Rühren und Schutzgasatmosphäre bei Raumtemperatur, gegebenenfalls unter Mitverwendung geeigneter Katalysatoren, beispielsweise zinnorganische Verbindungen, wie sie üblicherweise für Additionsreaktionen von Isocyanaten eingesetzt werden.

Das eingesetzte Trägermaterial kann nach der Umsetzung seiner funktionellen Gruppen mit den Isocyanatgruppen aufweisenden Monomeren in der Zusammensetzung für deren weitere Verwendung verbleiben oder es kann, beispielsweise durch Filtration, aus der Zusammensetzung entfernt werden.

Für den Fall, dass das eingesetzte Trägermaterial nach der Umsetzung seiner funktionellen Gruppen mit den Isocyanatgruppen aufweisenden Monomeren nicht in der Zusammensetzung verbleiben soll, kann das Zusammenführen der Zusammensetzung enthaltend mindestens ein Isocyanatgruppen aufweisendes Polyurethanpolymer sowie mindestens ein Isocyanatgruppen aufweisendes Monomer mit dem funktionalisierten Trägermaterial auch mittels Durchleiten der Zusammensetzung durch eine Schüttung oder Packung eines beschriebenen Trägermaterials, typischerweise in einem Fest- oder Wirbelbettreaktor, erfolgen.

In einer zweiten Ausführungsform handelt es sich bei der Zusammensetzung enthaltend mindestens ein Isocyanatgruppen aufweisendes Polyurethanpolymer sowie mindestens ein Isocyanatgruppen aufweisendes Monomer um eine Zusammensetzung, wie sie aus der Herstellung des Isocyanatgruppen aufweisenden Polyurethanpolymers hervorgeht, wobei die Zusammensetzung bereits weitere, für die Verwendung der Zusammensetzung als Klebstoff, Dichtstoff oder als Beschichtung üblicherweise eingesetzte Bestandteile, wie sie vorhergehend erwähnt sind, umfasst.

Bei dieser Ausführungsform des Verfahrens erfolgt das Zusammenführen der Zusammensetzung mit dem funktionalisierten Trägermaterial insbesondere in einem Vakuummischer bei Temperaturen im Bereich von 20°C bis 100°C.

Der Vorteil dieser Ausführungsform des Verfahrens liegt darin, dass das Verfahren grundsätzlich auch auf bereits gebrauchsfertige Zusammensetzungen auf Basis von Isocyanatgruppen aufweisenden Polyurethanpolymeren zur Verringerung des Anteils an Isocyanatgruppen aufweisenden Monomeren verwendet werden kann.

Meist bevorzugt wird im erfindungsgemässen Verfahren eine Zusammensetzung, welche direkt und ohne weitere Aufarbeitung aus der Herstellung des Isocyanatgruppen aufweisenden Polyurethanpolymers hervorgeht, bereitgestellt und mit dem funktionalisierten Trägermaterial zusammengeführt, so wie es in der ersten Ausführungsform des Verfahrens beschrieben ist.

Der Vorteil dieser Ausführungsform besteht einerseits darin, dass die Verringerung des Monomergehalts sehr effektiv ist. Andererseits weist diese Ausführungsform den Vorteil auf, dass sie sich bei Zusammensetzungen, welche mehrere unterschiedliche Isocyanatgruppen aufweisende Polyurethanpolymere umfassen, selektiv für die Verringerung des Anteils eines bestimmten Monomers einsetzen lässt.

Insbesondere eignet sich das erfindungsgemässe Verfahren zur Verringerung des Anteils an symmetrischen Diisocyanaten wie MDI, typischerweise in Zusammensetzungen enthaltend mindestens ein Isocyanatgruppen aufweisendes Polyurethanpolymer aus einem polymeren Diol und MDI als Diisocyanat. Die Wirkung des funktionalisierten Trägermaterials zur Verringerung des Anteils an MDI hat sich als besonders gut erwiesen.

Weiterhin betrifft die Erfindung eine Zusammensetzung erhalten durch ein Verfahren zur Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer, wie es vorhergehend beschreiben worden ist.

Die vorhergehend beschriebenen Zusammensetzungen werden vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert.

Weiterhin betrifft die vorliegende Erfindung die Verwendung einer vorhergehend beschriebenen Zusammensetzung als feuchtigkeitshärtender Klebstoff, Dichtstoff oder Beschichtung, welcher insbesondere bei Raumtemperatur applizierbar ist.

Ebenfalls betrifft die Erfindung eine gehärtete Zusammensetzung, welche erhältlich ist aus der Reaktion einer Zusammensetzung, wie sie vorhergehend beschrieben worden ist, mit Wasser, insbesondere in Form von Luftfeuchtigkeit.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Zugfestigkeit,** die **Bruchdehnung,** und der **Elastizitätsmodul** (E-Modul) bei 0 bis 100% Dehnung wurden nach DIN EN 53504 (Zuggeschwindigkeit: 200 mm/min) an während 7 Tagen bei 23°C und 50% relativer Luftfeuchtigkeit ausgehärteten Filmen mit einer Schichtdicke von 2 mm bestimmt.

Die **Shore A-Härte** wurde bestimmt nach DIN 53505, an während 7 Tagen bei 23°C und 50% relativer Luftfeuchtigkeit ausgehärteten Probekörpern mit einer Schichtdicke von 6 mm.

Die **Hautbildungszeit** (Zeit bis zur Klebefreiheit, "tack-free time") wurde bei 23°C und 50% relativer Luftfeuchtigkeit bestimmt. Zur Bestimmung der Hautbildungszeit wurde ein kleiner Teil des raumtemperaturwarmen Klebstoffs in einer Schichtdicke von ca. 2 mm auf Pappkarton aufgetragen und die Zeit bestimmt, die es dauerte, bis beim leichten Antippen der Oberfläche des Klebstoffs mittels einer Pipette aus LDPE erstmals keine Rückstände auf der Pipette mehr zurückblieben.

Für die Bestimmung der **Auspresskraft** wurden die Klebstoffe in innenlackierte Aluminiumkartuschen gefüllt. Nach einer Konditionierung von 12 Stunden bei 23°C wurden die Kartuschen geöffnet und mittels Auspressgerät ausgepresst. Dafür wurde eine Düse mit 5 mm Innendurchmesser auf die Kartusche aufgeschraubt. Mit einem Auspressgerät (Zwick/Roell Z005) wurde die Kraft bestimmt, die benötigt wurde, um den Dichtstoff mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.

Der **Monomergehalt** für MDI und TDI wurde folgendermassen bestimmt: Ca. 150 mg der Probe wurden in einem 10 ml Messkolben eingewogen und mit trockenem Acetonitril zur Marke gelöst. Nach der Derivatisierung mit 1 Vol.-% N-Propyl-4-nitrobenzylamin in Acetonitril (Volumenverhältnis 1:1) wurde die Probe 30 Minuten stehen gelassen und anschliessend durch eine Nylonmembran (Porengrösse 0,2 µm) filtriert. Die klare, farblose Lösung wurde mittels HPLC PDA-Detektor analysiert (HPLC-System: Varian ProStar LC-System; Detektor: Varian ProStar 330 Photodiodenarray; Säule: Kinetex 100 PFP, 2.6 µm 100x3 mm; Säulenofen: 30°C; Mobile Phase A: 0.04 M Natriumacetat (pH 4.5); Mobile Phase C: Acetonitril; HPLC-Methode: SOP-390C; Flussrate: 0.7 ml/min; Detektion Channel 1: UV 275 nm (2,6-, 2,4-TDI und c/t-IPDI), Detektion Channel 2: UV 250 nm (2,4'-MDI und 4,4'-MDI); Injektions Vol.: 10 µl).

### Herstellung des Isocyanatgruppen aufweisenden Polvurethanpolymers P1

1300 g Polyoxypropylendiol (Acclaim^{®} 4200 N, Bayer MaterialScience AG; OH-Zahl 28.5 mg KOH/g), 2600 g Polyoxypropylenpolyoxyethylentriol (Caradol^{®} MD34-02, Shell Chemicals Ltd., UK; OH-Zahl 35.0 mg KOH/g), 600 g 4,4'-Methylendiphenyldiisocyanat (4,4'-MDI; Desmodur^{®} 44 MC L, Bayer MaterialScience AG) und 500 g Diisodecylphthalat (DIDP; Palatinol^{®} Z, BASF SE, Deutschland) wurden nach bekanntem Verfahren bei 80°C zu einem NCO-terminierten Polyurethanpolymer mit einem Gehalt an freien Isocyanatgruppen von 2.05 Gew.-% umgesetzt.

Das hergestellte Isocyanatgruppen aufweisende Polyurethanpolymer ***P1*** weist ein Monomergehalt MDI von 2.38 Gew.-% auf.

### Herstellung des Isocyanatgruppen aufweisenden Polyurethanpolymers P2

3080 g Polyoxypropylendiol (Acclaim^{®} 4200 N, Bayer MaterialScience AG; OH-Zahl 28.5 mg KOH/g), 1540 g Polyoxypropylenpolyoxyethylentriol (Caradol^{®} MD34-02, Shell Chemicals Ltd., UK; OH-Zahl 35.0 mg KOH/g) und 385 g Toluylendiisocyanat (TDI; Desmodur^{®} T 80 P, Bayer MaterialScience AG) wurden bei 80°C zu einem NCO-terminierten Polyurethanpolymer mit einem Gehalt an freien Isocyanatgruppen von 1.53 Gew.-% umgesetzt.

Das hergestellte Isocyanatgruppen aufweisende Polyurethanpolymer ***P2*** weist ein Monomergehalt TDI von 0.15 Gew.-% auf.

Die eingesetzten Bestandteile mit der Handelsbezeichnung Aerosil^{®} sind kommerziell erhältlich von Evonik Degussa GmbH, Deutschland.

Beim Aerosil^{®} VP R511 handelt es sich um ein Trägermaterial, welches an seiner Oberfläche Aminogruppen aufweist.

Die eingesetzten Bestandteile mit der Handelsbezeichnung QuadraPure™ sind kommerziell erhältlich von Johnson Matthey, plc, Grossbritannien.

Die Verringerung des Anteils an Isocyanatgruppen aufweisenden Monomeren wurde bestimmt durch Messung des Monomergehalts in ***P1*** bzw. in **P2** und anschliessender Zusammenführung von ***P1*** bzw. ***P2*** mit den Trägermaterialien gemäss Tabelle 1 in Gewichtsteilen. Die Zusammenführung erfolgte bei Raumtemperatur und anschliessendem Rühren während 15 Minuten unter Schutzgasatmosphäre. Anschliessend folgte eine erneute Messung des Monomergehalts. Daraus wurde die Monomerreduktion berechnet.

**Tabelle 1 Zusammensetzungen enthaltend P1 oder P2 in Kombination mit verschiedenen Trägermaterialien und Resultate der Bestimmung der Monomerreduktion. Beispiele 4 und 5 sind Referenzbeispiele mit einer deutlich geringeren Reduktion des Monomergehalts als erfindungsgemässe Beispiele.**

| | **1** | **2** | **3** | **4** | **5** | **6** | **7** | **8** | **9** |
|---|---|---|---|---|---|---|---|---|---|
| ***P1*** | 100 | 100 | 100 | 100 | 100 | 100 | 100 | 100 | |
| ***P2*** | | | | | | | | | 100 |
| Aerosil^{®} VP R511 | 1 | 2.5 | 5 | | | | | | 2.5 |
| Aerosil^{®} 200 | | | | 2.5 | | | | | |
| Aerosil^{®} R972 | | | | | 2.5 | | | | |
| QuadraPure™ EDA | | | | | | 2.5 | | | |
| QuadraPure™ IDA | | | | | | | 2.5 | | |
| QuadraPure™ DET | | | | | | | | 2.5 | |
| Gehalt MDI [Gew.-%] | 1.07 | 1.09 | 0.67 | 1.52 | 1.62 | 1.74 | 1.83 | 1.93 | |
| Gehalt TDI [Gew.-%] | | | | | | | | | 0 |
| MDI-Reduktion [%] | 55 | 54 | 72 | 36 | 32 | 75 | 69 | 57 | |
| TDI-Reduktion [%] | | | | | | | | | 100 |

### Herstellung des Thixotropierungsmittels TM

In einem Vakuummischer wurden 1000 g Diisodecylphthalat (Palatinol^{®} Z, BASF SE, Deutschland) und 160 g 4,4'-Diphenylmethandiisocyanat (Desmodur^{®} 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Das Thixotropierungsmittel ***TM*** enthält 20 Gew.-% Thixotropierungsmittel in 80 Gew.-% Diisodecylphthalat.

### Herstellung der Klebstoffe

In einem Vakuummischer wurden entsprechend den in der Tabelle 2 angegebenen Gewichtsteilen alle Bestandteile zusammengegeben, während 15 Minuten bei 60°C eingeknetet und zu einer homogenen Paste verarbeitet. Diese wurde dann in innenlackierte Aluminium-Spreizkolbenkartuschen abgefüllt.

**Tabelle 2 Klebstoffe enthaltend P1 oder P2 in Kombination mit verschiedenen Trägermaterialien und weiteren Bestandteilen und Resultate. Beispiele 10 und 14 sind Referenzbeispiele.**

| | ***10*** | ***11*** | ***12*** | ***13*** | 14 |
|---|---|---|---|---|---|
| ***P1*** | 14 | | | | |
| ***P1*** + 1 Gew.-% Aerosil^{®} VP R511 | | 14.14 | | | |
| ***P1*** + 2.5 Gew.-% Aerosil^{®} VP R511 | | | 14.36 | | |
| ***P1*** + 5 Gew.-% Aerosil^{®} VP R511 | | | | 14.67 | |
| ***P1*** + 2.5 Gew.-% Aerosil^{®} 200 | | | | | 14.36 |
| ***P2*** | 14 | 14 | 14 | 14 | 14 |
| ***TM*** | 25 | 25 | 25 | 25 | 25 |
| Microcarb^{®} LB 10T | 35.89 | 35.89 | 35.89 | 35.89 | 35.89 |
| p-Toluolsulfonyl-isocyanat | 0.6 | 0.6 | 0.6 | 0.6 | 0.6 |
| DBTDL^{a)} | 0.01 | 0.01 | 0.01 | 0.01 | 0.01 |
| Aerosil^{®} R972 | 1 | 0.86 | 0.64 | 0.33 | 0.64 |
| TiO₂ | 2.5 | 2.5 | 2.5 | 2.5 | 2.5 |
| DIDP^{b)} | 7 | 7 | 7 | 7 | 7 |
| Gehalt MDI [Gew.-%] | 0.137 | 0.086 | 0.097 | 0.058 | 0.136 |
| MDI-Reduktion [%] | - | 37 | 29 | 58 | 1 |
| Zugfestigkeit [MPa] | 1.11 | 1.08 | 1.09 | 1.14 | 1.12 |
| Bruchdehnung [%] | 426 | 503 | 507 | 474 | 441 |
| Hautbildungszeit [min] | 34 | 24 | 24 | 24 | 44 |
| Auspresskraft [N] | 677 | 946 | 780 | 745 | 552 |
| Shore A | 45 | 42 | 44 | 44 | 44 |

| | | | | | |
|---|---|---|---|---|---|
| ^{a)} Dibutylzinndilaurat ^{b)} Diisodecylphthalat. | | | | | |

## Patentansprüche

1. Verwendung eines Trägermaterials, welches an seiner Oberfläche funktionelle Gruppen aufweist, die gegenüber Isocyanatgruppen reaktiv sind,
zur Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer.

2. Verwendung gemäss Anspruch 1 **dadurch gekennzeichnet, dass** das Trägermaterial an seiner Oberfläche mit funktionellen Gruppen, welche gegenüber Isocyanatgruppen reaktiv sind, funktionalisiert ist.

3. Verwendung gemäss einem der Ansprüche 1 oder 2, **dadurch gekennzeichnet, dass** es sich beim Trägermaterial um ein Siliciumdioxid handelt, wobei das Siliciumdioxid mit einem Organosilan funktionalisiert ist, dessen organischer Rest mindestens eine funktionelle Gruppe aufweist, welche gegenüber Isocyanatgruppen reaktiv ist.

4. Verwendung gemäss einem der Ansprüche 1 oder 2, **dadurch gekennzeichnet, dass** es sich beim Trägermaterial um funktionalisierte, makroporöse Partikel aus Polystyrol handelt.

5. Verwendung gemäss einem der vorhergehenden Ansprüche, **dadurch gekennzeichnet, dass** die funktionellen Gruppen, welche gegenüber Isocyanatgruppen reaktiv sind, Aminogruppen sind.

6. Verwendung gemäss Anspruch 3, **dadurch gekennzeichnet, dass** das Siliciumdioxid amorphes Siliciumdioxid ist.

7. Zusammensetzung umfassend
- mindestens ein Isocyanatgruppen aufweisendes Polyurethanpolymer;
- mindestens ein Isocyanatgruppen aufweisendes Monomer;
sowie
- mindestens ein Trägermaterial, welches an seiner Oberfläche funktionelle Gruppen aufweist, die gegenüber Isocyanatgruppen reaktiv sind;
wobei die funktionellen Gruppen des Trägermaterials zumindest teilweise mit Isocyanatgruppen des Isocyanatgruppen aufweisenden Monomers umgesetzt sind.

8. Zusammensetzung gemäss Anspruch 7, **dadurch gekennzeichnet, dass** das Trägermaterial an seiner Oberfläche mit funktionellen Gruppen, welche gegenüber Isocyanatgruppen reaktiv sind, funktionalisiert ist.

9. Zusammensetzung gemäss einem der Ansprüche 7 oder 8, **dadurch gekennzeichnet, dass** es sich beim Trägermaterial um ein Siliciumdioxid handelt, wobei das Siliciumdioxid mit einem Organosilan funktionalisiert ist, dessen organischer Rest mindestens eine funktionelle Gruppe aufweist, welche gegenüber Isocyanatgruppen reaktiv ist.

10. Zusammensetzung gemäss einem der Ansprüche 7 oder 8, **dadurch gekennzeichnet, dass** es sich beim Trägermaterial um funktionalisierte, makroporöse Partikel aus Polystyrol handelt.

11. Zusammensetzung gemäss einem der Ansprüche 7 bis 10, **dadurch gekennzeichnet, dass** der Anteil an Trägermaterial 0.1 bis 10 Gew.-%, bezogen auf das Gesamtgewicht der Zusammensetzung, beträgt.

12. Verfahren zur Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer umfassend die Schritte
- Bereitstellen einer Zusammensetzung enthaltend mindestens ein Isocyanatgruppen aufweisendes Polyurethanpolymer sowie mindestens ein Isocyanatgruppen aufweisendes Monomer;
- Zusammenführen der Zusammensetzung enthaltend mindestens ein Isocyanatgruppen aufweisendes Polyurethanpolymer sowie mindestens ein Isocyanatgruppen aufweisendes Monomer mit einem Trägermaterial, welches an seiner Oberfläche funktionelle Gruppen aufweist, die gegenüber Isocyanatgruppen reaktiv sind.

13. Zusammensetzung erhalten durch ein Verfahren gemäss Anspruch 12.

14. Verwendung einer Zusammensetzung gemäss einem der Ansprüche 7 oder 13 als Klebstoff, Dichtstoff oder Beschichtung.

15. Gehärtete Zusammensetzung erhalten aus der Reaktion einer Zusammensetzung gemäss einem der Ansprüche 7 oder 13 mit Wasser.
